(19) **Europäisches Patentamt**

**European Patent Office**

**Office européen des brevets**

(11) **EP 0 765 070 B1**

(12) **EUROPEAN PATENT SPECIFICATION**

(45) Date of publication and mention
of the grant of the patent:
**14.05.2003 Bulletin 2003/20**

(51) Int Cl.⁷: **H04N 1/00**

(21) Application number: **96114124.9**

(22) Date of filing: **04.09.1996**

(54) **Method for detecting the leading edge of a document and associated device**

Verfahren und Vorrichtung zum Erkennen des Vorderrandes eines Dokuments

Procédé et dispositif de détection du bord avant d'un document

(84) Designated Contracting States:
**DE DK ES FR GB**

(30) Priority: **20.09.1995 IT TO950745**

(43) Date of publication of application:
**26.03.1997 Bulletin 1997/13**

(73) Proprietor: **Ing. C. Olivetti & C., S.p.A.**
**10015 Ivrea (IT)**

(72) Inventors:
• **Crotti, Alessandro**
**10019 Strambino (TO) (IT)**
• **Mondino, Mauro**
**10015 Ivrea (TO) (IT)**
• **Schiffini, Stefano**
**10018 Pavone Canavese (TO) (IT)**

(74) Representative: **Casuccio, Carlo et al**
**Olivetti S.p.A.,**
**DPT&SEM-DIR.PROPRIETA' INTELLETTUALE E**
**CONTRATTI TECNOLOGICI,**
**Via G. Jervis, 77**
**10015 Ivrea (Torino) (IT)**

(56) References cited:
**EP-A- 0 509 549**   **US-A- 4 789 903**

## Description

<u>Field of the invention</u> - The present invention relates to a method (and relative device) for detecting the leading edge of a document suitable for use in equipment for digital processing of documents such as, for example, facsimile machines, scanners, digital copying machines.

<u>Related Technological Art</u> - Devices such as the ones mentioned above are known in the art, generally comprised, for example, by a common microswitch the arm of which is actuated by the leading edge of the document, more often than not a sheet of paper. However this system lacks precision and is not suited for use with documents comprised by a sheet of very light paper (for example 40-50 g/m$^2$), on account of the force needed to actuate the microswitch.

A known alternative is represented by the use of photoelectric sensors comprised, for example, by a light-emitting diode and a phototransistor, in which the document is detected because it interrupts the light beam between the diode and the phototransistor (transmission sensors), or reflects the beam of light previously absorbed by a black surface (reflection sensor), either directly or indirectly (by means of an arm actuated by the document), thus working to an "all or nothing"/"black or white" principle. Often however these devices are not sufficiently precise, or fail to eliminate the risk of constituting an impediment to feeding of the document, or at any event represent a component and therefore an additional cost.

Performing detecting of a document's leading edge using a photoelectric device already generally included in equipment such as facsimile machines, scanners and digital copying machines for reading and digitizing an image present on the document is known in the art, see US-A-4 789 903.

An object of this invention is that of defining a device for detecting the leading edge of a document that provides an extremely accurate response from the point of view of geometric precision.

A further object of this invention is that of defining a device for detecting the leading edge of a document that does not present an impediment of any kind for the document.

Yet a further object of this invention is that of defining a device for detecting the leading edge of a document that does not present operating problems of any kind inside a very wide range of document thicknesses.

The above objects are achieved by means of a method for detecting the leading edge of a document and relative device, according to the independent claims.

These and other objects, characteristics and advantages of the present invention will become apparent in the course of the following description of a preferred embodiment, provided as a non-exhaustive example, taken in conjunction with the accompanying drawings.

## BRIEF DESCRIPTION OF DRAWINGS

Fig. 1 is a schematic view of a transverse section of the device according to the present invention.
Fig. 2 is a block diagram illustrating the flow of operations according to the method of the invention.
Fig. 3a illustrates a first form of construction of the document feed roller.
Fig. 3b illustrates a second form of construction of the document feed roller.
Fig. 3c illustrates a third form of construction of the document feed roller.

## DETAILED DESCRIPTION OF THE PREFERRED EMBODIMENT

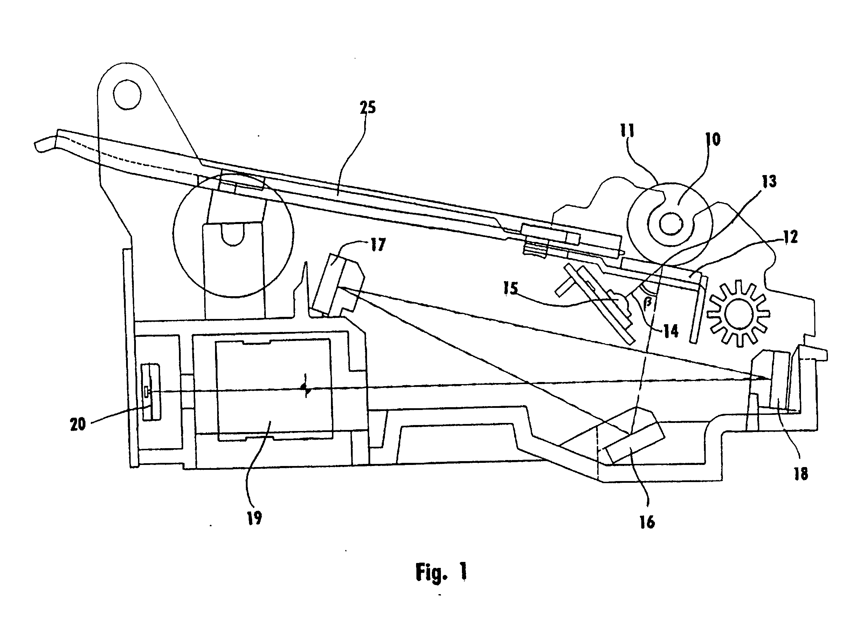

Fig. 1 illustrates schematically the device for detecting the leading edge of a document according to the present invention. It comprises a feed roller 10 of length defined in relation to the dimensions of the document to be fed, with an outer surface 11 generally of a rubber material, apt for rotating into contact with a transparent glass 12, with respect to which it defines a theoretical line of tangency 13, which, on account of the slight deflection of the rubber, becomes in practice an area of contact of a width that varies depending on the degree of deformation of the rubber. The surface 11 is typically white in colour, as the roller 10 is also used as the reference element for the calibration of a photoelectric device 20, described subsequently.

A lighting device 15 constituted, for example, by a LED Array known in the art, made up of a multiplicity of aligned light-emitting diodes, on receiving a command from the electronic controller of the equipment that the device is a part of, not shown in Fig. 1, selectively illuminates the white roller 10 in the area of contact along the line of tangency 13; the light diffused from the area of contact is collected partly by a system of three plane mirrors 16, 17, 18 which direct it at a lens 19, which in turn focuses it on the sensitive surface of the photoelectric device 20, such as for example the CCD known in the art, which converts it into an electric signal.

The electric signal output by the CCD device is sent to an "image processor" circuit in the electronic controller for subsequent processing according to methods known in the art and for storing or transmitting. In accordance with the simplest methods, the electric output signal, sampled at constant time intervals, represents one "white" pixel or one "black" pixel, depending on whether its voltage level is greater than or less than a determined threshold value.

A document to be processed, typically a sheet of white paper bearing information printed on one side, is set "face down", that is with the side bearing the information facing downwards, on an insertion and support plate 25 and, for example by means of a pair of rollers not shown in the figure, is fed at a first speed until it becomes gripped between the glass 12 and the white roller 10, i.e. with its leading edge theoretically in correspondence with the line of tangency 13 between the white roller 10 and the glass 12. On recognizing this condition, the electronic controller commands, for example, starting of the document reading phase (digitizing) whereas the document continues being fed (scanning) at a second speed, defined according to the desired resolution.

A typical value for resolution is, for example, 200 pixels/inch, or approximately 8 pixels/mm, in both the vertical and horizontal directions. In this case, the CCD photoelectric device 20 possesses for example at least 1650, aligned sensitive elements (commonly known as pixels, the abbreviation of "picture elements") capable of "reading" a line of the document 210 mm long (i.e. the theoretical width of a sheet of A4 paper) and 1/200 of an inch (approximately 1/8 mm) wide.

Digitizing of the document consists in the fact that it is converted by the "image processor" into a succession of reading lines, constituted by the information regarding the status, i.e. that of "white pixel" or "black pixel", assumed by each of the sensitive elements of the photoelectric device 20 at consecutive times, with an interval between each corresponding to the time it takes the document to advance by 1/200 inch. When digitizing a "Letter" format document (8.5x11 inches), with a resolution of 200 pixelslinch, 2200 reading lines are obtained, each containing the information concerning the status of 1700 pixels.

For detecting the leading edge of the document according to the present invention, only a fraction of the total number of pixels need be used, for example only 50-200 and preferably only the 80-100 located in the centre of the CCD type device 20.

When the LED Array 15 illuminates the white roller 10 with no document present, the incident light on the CCD device 20 generates an output signal of a determined voltage level, for example a "high" level corresponding to white "pixels"; as the document approaches the line of tangency 13 between the white roller 10 and the glass 12, the voltage level of the output signal drops for a time roughly corresponding to the time it takes the document leading edge to travel 3/8 mm, before returning to substantially the same level as before (provided that the document is a white sheet without any markings for at least a certain upper margin) whenever the leading edge of the sheet is substantially corresponding to the line of tangency 13. As scanning of the document continues beyond the upper margin, the voltage level then varies depending on the information written on the document being read.

The temporary lowering of the output voltage of the CCD type device 20 is used to advantage by the method of this invention for detecting position of the leading edge of the document. Said lowering of the output signal voltage level corresponds to projection on the white roller of the "shadow" of the document's leading edge, insofar as the document intercepts a varying amount of the light emitted by the LED Array 15, rediffusing it in various directions so that it is no longer collected by the mirrors 16, 17, 18 and focused on the surface of the CCD type device 20.

For the phenomenon described above to occur in a sufficiently perceptible way, the angle $\beta$ between the axis 14 of the LED Array 15 and a line perpendicular to the glass 12 at the point of tangency with the white roller 10 must be between 15 and 65°, and preferably between 30 and 50°.

With there being no marked distinction, as is also the case with traditional reflection type photoelectric sensors, between a background of a non-reflecting black surface and the white surface of the document, the method of this invention proceeds according to a principle of probability for distinguishing the leading edge of the document (white) from the background represented by the feed roller 10, also white colour.

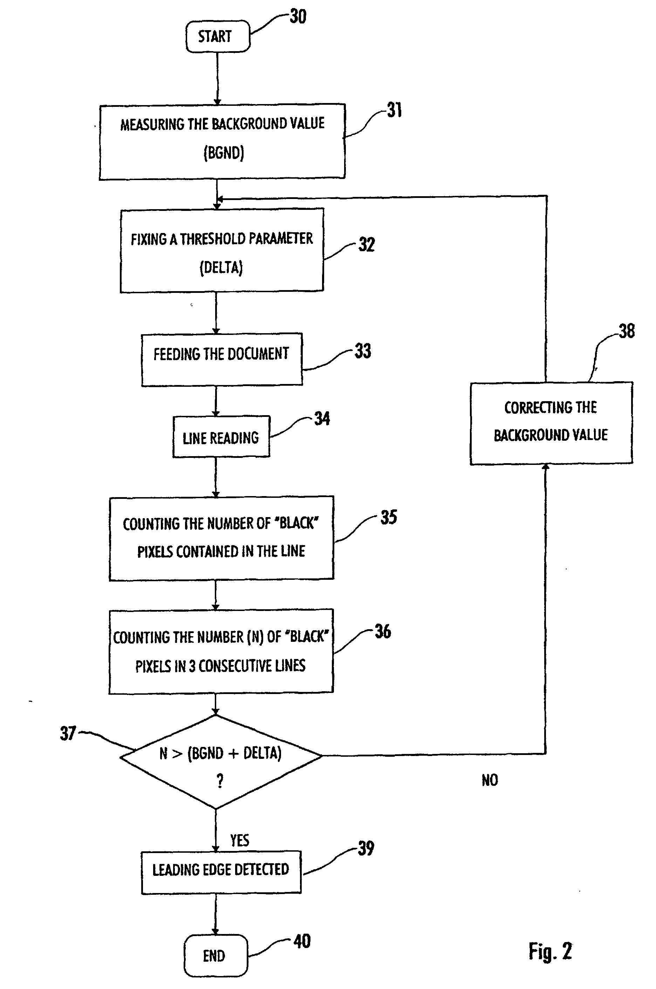

Said method is described in the following with reference to the flow diagram of Fig. 2, represented by the succession of steps 30-40:

- step 30 is the start of the sequence, which can be commanded by the operator, after inserting the document to be read in the device of Fig. 1, by actuating the "START' button on the console of the equipment, for example a facsimile machine, incorporating the device in question;
- step 31 consists in measuring the background value BGND of the quantity of light reflected by the white roller 10 with no document present, a value represented as the average of the number of "black" pixels identified on a sufficiently high number of consecutive reading lines, for example on 32 successive readings of the central pixels only, for example 80, of the CCD type device 20. This is so as to take into consideration any deterioration or dirt forming on the surface 11 of the white roller 10 at the time of the reading with respect to its starting condition;
- step 32 consists in fixing a parameter DELTA, determined experimentally with reference to the specifications of the device and the documents used and attributing suitable tolerances to the variables concerned, which represents the minimum number of "black" pixels that must be read over and above the background value BGND to be able to positively identify the document leading edge;
- step 33 consists in feeding the document on the plate 25 at a given constant speed;
- for each 1/8 mm step of the document as it advances, one line is detected (step 34) limited to the above-mentioned pixels located in the centre of the CCD type device 20, and the number of "black" pixels it contains is counted (step 35);

- in step 36 the sum N of the number of "black" pixels counted in three consecutive reading lines is calculated so that the reading lines taken into consideration are, in "shifting" manner, always the last three detected; the number three was determined experimentally as being the most appropriate for use with the device described in the foregoing, but should not be considered binding and may be increased or decreased in relation to the specific configuration of the device that is implemented;

- in step 37 the value of the sum N calculated previously is compared with the value (BGND+DELTA) to verify if

$$N \leq (BGND + DELTA) \qquad (1)$$

or

$$N > (BGND + DELTA) \qquad (2)$$

- in the former case (step 38), the leading edge of the document has not come to correspond to the line of tangency 13 between the white roller 10 and the glass 12; this means that the reading lines detected are all still those of the light diffused by the white roller 10 only, and in this case a correction is made to the background value BGND measured initially in step 32 using suitable algorithms, easily determined by persons skilled in the sector art;

- in the second case (step 39), the leading edge of the document is in correspondence with the above-mentioned line of tangency 13, and this results in generation by the electronic controller of a signal that the leading edge has been detected, so as to start the subsequent document digitizing operation and conclude the sequence (step 40).

Changes may be made to the white roller 10 with a view to improving operation of the device of the invention, with particular regard to reducing the risk of malfunctions following excessive formation of dirt on the surface 11 which, by increasing the background value BGND, reduces the differential that may be utilised for distinguishing the document leading edge from the background.

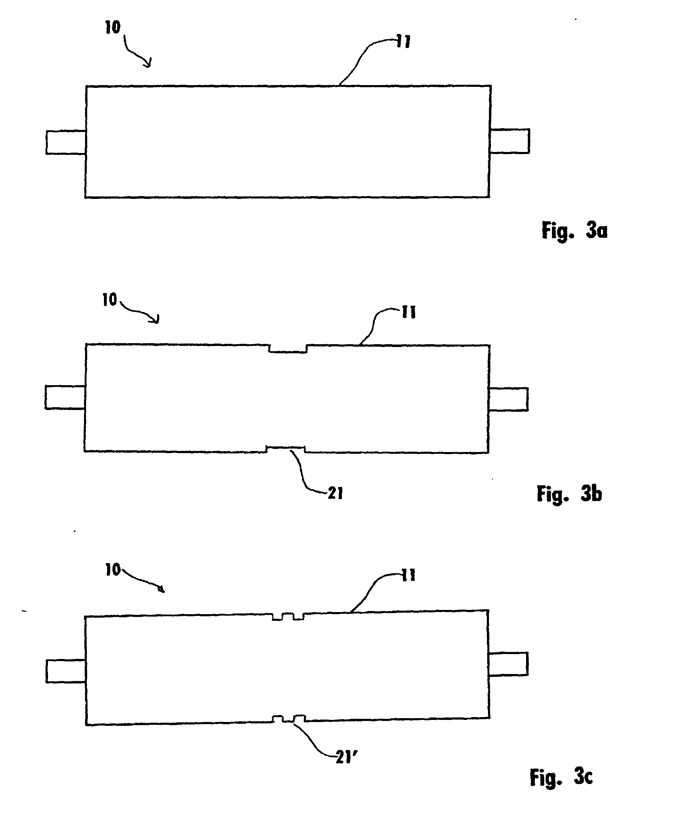

For example, Fig. 3a illustrates the white roller 10 according to a first form of construction, in which the cylindrical surface 11 is uniform; Fig. 3b illustrates the white roller 10 according to a second form of construction, in which the cylindrical surface 11 has a groove 21 in the centre, taking the form of a segment in correspondence with the central pixels of the CCD type device 20 actually read during execution of the steps 30-40 described previously: as the surface 11 of the roller 10 in correspondence with the groove 21 never comes into contact with the document or with the roller 10, it is much less likely to become dirty.

Fig. 3c illustrates the white roller 10 according to a third form of construction, in which the cylindrical surface 11 has a pair of grooves 21' in the centre. These different forms of construction of the white roller 10 are simply examples, representing only some of the variants possible, as indeed other variants, additions or changes may be made to the present invention by persons skilled in the sector art.

For example, in place of the continuous roller, it is possible to use a plurality of rollers fitted on a common axis as the document feeding means, or even a belt delivery system.

Or, in place of the LED Array, it is possible to use a fluorescent lamp as the document lighting means, or even one or more incandescent lamps.

Additionally, a number of plane mirrors other than three may be used as the optical means, or even no mirror at all.

It is also possible to use a Contact Image Sensor (known in the art as a CIS) as the photoelectric conversion means, in place of the CCD device.

Or, as the document support means, in place of the glass, it is also possible to use a plate constructed from any kind of material transparent to the light generated by the lighting means.

Or again, it is possible to use as the electronic means devices incorporating one or more microprocessors, or electronic components of other types such as ASIC (Application Specific Integrated Circuit) or Gate Arrays.

In short, while adhering to the principle of this invention, details of the design and the forms of embodiment described and illustrated in the foregoing may be amply modified without exiting from the scope of the invention.

## Claims

1. A method for detecting the leading edge of a document, for use in an equipment for digital processing of graphic information on a document, comprising feeding means (10) possessing a white-colour outer surface (11) for feeding the document in a first direction substantially perpendicular to said edge; light-transparent support means (12) for supporting the document in contact with said feeding means and thus defining an area of contact (13); lighting means (15) for illuminating said area of contact with said light transmitted through said support means towards said area of contact along a second direction; photoelectric conversion means (20) for converting at least a fraction of said light diffused by said area of contact into an electric signal, said photoelectric conversion means comprising a first multiplicity of picture elements, also designated as pixels hereinafter, arranged at a constant pitch along a first line substantially parallel to said edge; electronic processing and control means for processing said signal, attributing to the signal of each of said picture elements the status of a black pixel or a white pixel depending on whether the level of said electrical signal is respectively lower than or greater than a determined value, and generating at determined times a reading line constituted by the aggregate of said states attributed to said first multiplicity of pixels, the method being **characterized by** comprising the following steps:

- generating a said reading line and determining (31) therefrom a first number (BGND) of black pixels contained in said reading line corresponding to said fraction of said light diffused by said area of contact (13) with no document present;
- defining (32) a second number of black pixels, greater than said first number by a determined amount (DELTA);
- feeding (33) the document by a predetermined amount, generating (34) a further reading line and determining (36) therefrom a third number (N) of black pixels contained in said reading line;
- comparing (37) said third number (N) with said second number and, if said third number (N) is less than said second number, repeating the preceding step; or, if said third number (N) is greater than said second number, generating (39) a document leading edge detecting signal.

2. A method according to claim 1, **characterized in that** said first line has a centre and said first multiplicity of pixels comprises a first plurality of pixels disposed in said centre, and **in that** said reading line is constituted solely by the states of said first plurality of pixels.

3. A method according to claim 2, **characterized in that** the number of said first plurality of pixels is between 50 and 200.

4. A method according to claim 1, **characterized in that** said feeding means comprise a roller (10) having said outer surface (11) continuous.

5. A method according to claim 1, **characterized in that** said feeding means comprise a roller (10) having at least one groove (21) in said outer surface located at the centre along the axis of said roller.

6. A method according to claim 1, **characterized in that** said lighting means (15) comprise a multiplicity of light-emitting diodes that emit said light in said second direction.

7. A method according to claim 6, **characterized in that** said multiplicity of light-emitting diodes is disposed in a second line parallel to said edge.

8. A method according to claim 6, **characterized in that** said second direction forms an angle β between 15° and 65° with respect to the normal of the plane formed by said support means at said contact area.

9. A method according to claim 8, **characterized in that** said angle β is between 30° and 50°.

10. A method according to claim 1, **characterized in that** said lighting means (15) comprise a fluorescent lamp.

11. A method according to claim 1, **characterized in that** said lighting means (15) comprise at least one incandescent lamp.

12. A method according to claim 1, **characterized in that** said photoelectric conversion means (20) comprise a CCD type photoelectric device.

13. A method according to claim 1, **characterized in that** said photoelectric conversion means (20) comprise a Contact Image Sensor.

14. A method according to claim 1, **characterized in that** said feeding means (10) comprise a delivery belt.

15. A method according to any of the previous claims, **characterized in that** said first number (BGND) is determined (36) by calculating the average of the number of black pixels contained in a plurality of consecutive reading lines with no document present.

16. A method according to claim 15, **characterized in that** said plurality of consecutive reading lines is constituted by thirty-two consecutive reading lines.

17. A method according to any of the previous claims, **characterized in that** it further comprises the step (38) of modifying said first number (BGND) in relation to the value of said third number (N), if said third number is less than said second number.

18. A method according to any of the previous claims, **characterized in that** said third number (N) is determined on the basis of the sum of the number of "black pixels" contained in another plurality of consecutive reading lines.

19. A method according to claim 18, **characterized by** the fact that said another plurality is constituted by three consecutive reading lines.

20. A device for detecting the leading edge of a document comprising:

    - feeding means (10) comprising a white colour outer surface (11) for feeding the document in a first direction substantially perpendicular to said edge;
    - support means (12) for supporting the document in contact with said feeding means thus defining an area of contact (13), said support means being capable of transmitting light with substantially no attenuation;
    - lighting means (15) for illuminating said area of contact (13) with said light transmitted through said support means towards said area of contact;
    - photoelectric conversion means (20) for converting at least a fraction of said light diffused by said area of contact into an electric signal having a level substantially proportional to said fraction, said photoelectric conversion means (20) comprising a first multiplicity of picture elements, also designated as pixels hereinafter arranged at a constant pitch along a first line substantially parallel to said edge;
    - electronic processing and control means for processing said signal by attributing to the signal of each of said picture elements the status of a black pixel or a white pixel depending on whether the level of said electric signal is respectively lower than or greater than a determined value, and generating at determined times a reading line constituted by the aggregate of said states attributed to said first multiplicity of pixels in coincidence with said times;

    **characterized in that** said electronic processing and control means operate according to a method that comprises the following steps:

    - generating a said reading line and determining (31) therefrom a first number (BGND) of black pixels contained in said reading line corresponding to said fraction of said light diffused by said area of contact (13) with no document present;
    - defining (32) a second number of black pixels, greater than said first number (BGND) by a determined amount (DELTA);
    - feeding (33) the document by a predetermined amount, generating (34) a further reading line and determining (36) therefrom a third number (N) of black pixels contained in said reading line;
    - comparing (37) said third number (N) with said second number and, if said third number is less than said second number, repeating the previous step, or, if said third number (N) is greater than said second number, generating (39) a document leading edge detecting signal.

21. A device according to claim 20, **characterized by** further comprising optical means (16, 17, 18, 19) for collecting and focusing said diffused light, and in that said optical means comprise at least one plane mirror (16, 17, 18).

22. A device according to claim 21, **characterized in that** said optical means comprise a converging lens (19).

23. Equipment for facsimile transmission/reception, **characterized by** comprising means for carrying out the method for detecting the leading edge of a document according to any of the claims from 1 to 19.

24. Equipment for facsimile transmission/reception, **characterized by** comprising a device for detecting the leading edge of a document according to any of the claims from 20 to 22.


**Patentansprüche**

1. Verfahren zur Ermittlung der Vorderkante eines Dokuments für ein Gerät zur digitalen Verarbeitung grafischer Information auf einem Dokument, bestehend aus einer Vorschubeinrichtung (10) mit einer weißen Außenfläche (11), um das Dokument in einer ersten Richtung im Wesentlichen senkrecht zur Kante vorzuschieben; einer lichttransparenten Auflageeinrichtung (12) zum Halten des Dokuments in Kontakt mit der Vorschubeinrichtung und somit zum Definieren eines Kontaktbereichs (13); einer Beleuchtungseinrichtung (15) zur Beleuchtung des Kontaktbereichs mit dem Licht, das durch die Auflageeinrichtung zum Kontaktbereich längs einer zweiten Richtung übertragen wird; einer photoelektrischen Umwandlungseinrichtung (20) zum Umwandeln wenigstens eines Teils des Lichts, das durch den Kontaktbereich gestreut wird, in ein elektrisches Signal, wobei die photoelektrische Umwandlungseinrichtung eine erste Vielzahl Bildelemente, nachfolgend auch als Pixel bezeichnet, aufweist, die in einem konstanten Abstand längs einer ersten Linie im Wesentlichen parallel zur Kante angeordnet sind; einer elektronischen Verarbeitungs- und Steuereinrichtung zur Verarbeitung des Signals, die dem Signal jedes der Bildelemente den Zustand eines schwarzen Pixels oder eines weißen Pixels in Abhängigkeit davon zuordnet, ob der Pegel des elektrischen Signals jeweils unter oder über einem bestimmten Wert liegt, und zu bestimmten Zeiten eine Leselinie erzeugt, die aus dem Aggregat der Zustände besteht, die der ersten Vielzahl Pixel zugeordnet werden, wobei das Verfahren die folgenden Schritte aufweist:

- Erzeugen einer Leselinie und Bestimmen (31) einer ersten Anzahl (BGND) schwarzer Pixel daraus, die in der Leselinie entsprechend dem Anteil des Lichts enthalten sind, das durch den Kontaktbereich (13) gestreut wird, wenn kein Dokument vorhanden ist;
- Bestimmen (32) einer zweiten Anzahl schwarzer Pixel größer als die erste Anzahl durch eine bestimme Menge (DELTA);
- Vorschieben (33) des Dokuments um eine bestimmte Größe, Erzeugen (34) einer weiteren Leselinie und Bestimmen (36) einer dritten Anzahl (N) schwarzer Pixel daraus, die in der Leselinie enthalten sind;
- Vergleichen (37) der dritten Anzahl (N) mit der zweiten Anzahl, und, wenn die dritte Anzahl (N) kleiner als die zweite Anzahl ist, Wiederholen des vorherigen Schritts, oder, wenn die dritte Anzahl (N) größer als die zweite Anzahl ist, Erzeugen (39) eines Dokumentenvorderkanten-Ermittlungssignals.

2. Verfahren nach Anspruch 1, **dadurch gekennzeichnet dass**, die erste Linie eine Mitte hat, und die erste Vielzahl Pixel eine erste Menge Pixel umfasst, die in der Mitte angeordnet sind, und dass die Leselinie nur aus den Zuständen der ersten Menge Pixel besteht.

3. Verfahren nach Anspruch 2, **dadurch gekennzeichnet, dass** die Anzahl der ersten Menge Pixel zwischen 50 und 200 liegt.

4. Verfahren nach Anspruch 1, **dadurch gekennzeichnet, dass** die Vorschubeinrichtung eine Rolle (10) hat, die die Außenfläche (11) kontinuierlich aufweist.

5. Verfahren nach Anspruch 1, **dadurch gekennzeichnet, dass** die Vorschubeinrichtung eine Rolle (10) hat, die wenigstens eine Nut (21) in der Außenfläche aufweist, die in der Mitte längs der Achse der Rolle liegt.

6. Verfahren nach Anspruch 1, **dadurch gekennzeichnet, dass** die Beleuchtungseinrichtung (15) eine Vielzahl Lichtemissionsdioden hat, die das Licht in der zweiten Richtung emittieren.

7. Verfahren nach Anspruch 1, **dadurch gekennzeichnet, dass** die Vielzahl Lichtemissionsdioden in einer zweiten Linie parallel zur Kante angeordnet ist.

8. Verfahren nach Anspruch 6, **dadurch gekennzeichnet, dass** die zweite Richtung einen Winkel β zwischen 15° und 65° bzgl. der Normalen der Ebene bildet, die durch die Auflageeinrichtung am Kontaktbereich gebildet ist.

9. Verfahren nach Anspruch 8, **dadurch gekennzeichnet, dass** der Winket β zwischen 30° und 50° liegt.

10. Verfahren nach Anspruch 1, **dadurch gekennzeichnet, dass** die Beleuchtungseinrichtung (15) eine Floureszenzlampe ist.

11. Verfahren nach Anspruch 1, **dadurch gekennzeichnet, dass** die Beleuchtungseinrichtung (15) wenigstens eine Glühlampe aufweist.

12. Verfahren nach Anspruch 1, **dadurch gekennzeichnet, dass** die photoelektrische Umwandlungseinrichtung (20) eine photoelektrische Einrichtung vom CCD-Typ aufweist.

13. Verfahren nach Anspruch 1, **dadurch gekennzeichnet, dass** die photoelektrische Umwandlungseinrichtung (20) einen Kontaktbildsensor aufweist.

14. Verfahren nach Anspruch 1, **dadurch gekennzeichnet, dass** die Vorschubeinrichtung (10) ein Förderband aufweist.

15. Verfahren nach einem der vorhergehenden Ansprüche, **dadurch gekennzeichnet, dass** die erste Anzahl (BGND) durch Berechnen des Mittelwerts der Anzahl schwarzer Pixel bestimmt wird (36), die in der Menge sequentieller Leselinien enthalten ist, wenn kein Dokument vorhanden ist.

16. Verfahren nach Anspruch 15, **dadurch gekennzeichnet, dass** die Menge sequentieller Leselinien aus 32 sequentieller Leselinien besteht.

17. Verfahren nach einem der vorhergehenden Ansprüche, **dadurch gekennzeichnet, dass** es weiterhin den Schritt (38) der Modifizierung der ersten Anzahl (BGND) relativ zur Größe der dritten Anzahl (N) umfasst, wenn die dritte Anzahl kleiner als die zweite Anzahl ist.

18. Verfahren nach einem der vorhergehenden Ansprüche, **dadurch gekennzeichnet, dass** die dritte Anzahl (N) auf der Grundlage der Summe der Anzahl schwarzer Pixel bestimmt wird, die in einer weiteren Menge sequentieller Leselinien enthalten ist.

19. Verfahren nach Anspruch 18, **dadurch gekennzeichnet, dass** die weitere Menge aus drei aufeinanderfolgenden Leselinien besteht.

**20.** Vorrichtung zur Ermittlung der Vorderkante eines Dokuments, bestehend aus:

- einer Vorschubeinrichtung (10), die eine weiße Außenfläche (11) zum Vorschieben des Dokuments in einer ersten Richtung im Wesentlichen senkrecht zur Kante hat;
- einer Auflageeinrichtung (12) zum Halten des Dokuments in Kontakt mit der Vorschubeinrichtung, so dass ein Kontaktbereich (13) definiert wird, wobei die Auflageeinrichtung Licht im Wesentlichen ohne Dämpfung übertragen kann;
- einer Beleuchtungseinrichtung (15) zum Beleuchten des Kontaktbereichs (13) mit durch die Auflageeinrichtung zum Kontaktbereich übertragenen Lichts;
- einer photoelektrischen Umwandlungseinrichtung (20) zum Umwandeln wenigstens eines Teils des vom Kontaktbereich gestreuten Lichts in ein elektrisches Signal, das einen Pegel im Wesentlichen proportional dem Anteil hat, wobei die photoelektrische Umwandlungseinrichtung (20) eine erste Vielzahl von Bildelementen hat, die nachstehend auch als Pixel bezeichnet werden, die in einem konstanten Abstand längs einer ersten, zur Kante im Wesentlichen parallelen Linie angeordnet sind;
- einer elektronischen Verarbeitungs- und Steuereinrichtung zur Verarbeitung des Signals durch Zuordnen zum Signal jedes der Bildelemente des Zustand eines schwarzen Pixels oder weißen Pixels in Abhängigkeit davon, ob der Pegel des elektronischen Signals jeweils kleiner oder größer als der bestimmte Wert ist, und zum Erzeugen zu bestimmten Zeiten einer Leselinie, die aus dem Aggregat der Zustände besteht, die der ersten Vielzahl von Pixeln, in Übereinstimmung mit den Zeiten, zugeordnet werden,

    **dadurch gekennzeichnet, dass** die elektronische Verarbeitungs- und Steuereinrichtung entsprechend einem Verfahren arbeitet, das die folgenden Schritte aufweist:

- Erzeugen einer Leselinie und Bestimmen (31) einer ersten Anzahl (BGND) schwarzer Pixel daraus, die in der Leselinie entsprechend dem Anteil des Lichts enthalten sind, das durch den Kontaktbereich (13) gestreut wird, wenn kein Dokument vorhanden ist;
- Bestimmen (32) einer zweiten Anzahl schwarzer Pixel größer als die erste Anzahl ((BGND)) durch eine bestimme Menge (DELTA);
- Vorschieben (33) des Dokuments um eine bestimmte Größe, Erzeugen (34) einer weiteren Leselinie und Bestimmen (36) einer dritten Anzahl (N) schwarzer Pixel daraus, die in der Leselinie enthalten sind;
- Vergleichen (37) der dritten Anzahl (N) mit der zweiten Anzahl, und, wenn die dritte Anzahl kleiner als die zweite Anzahl ist, Wiederholen des vorherigen Schritts, oder, wenn die dritte Anzahl (N) größer als die zweite Anzahl ist, Erzeugen (39) eines Dokumentenvorderkanten-Ermittlungssignals.

**21.** Vorrichtung nach Anspruch 20, **dadurch gekennzeichnet, dass** sie weiterhin eine optische Einrichtung (16, 17, 18, 19) zum Sammeln und Fokussieren des gestreuten Lichts aufweist, und dass die optische Einrichtung wenigstens einen ebenen Spiegel (16, 17, 18) aufweist.

**22.** Vorrichtung nach Anspruch 21, **dadurch gekennzeichnet, dass** die optische Einrichtung eine konvergierende Linse (19) aufweist.

**23.** Gerät zum Faksimile-Senden/-Empfangen, **gekennzeichnet durch** eine Einrichtung zur Durchführung des Verfahrens zur Ermittlung der Vorderkante eines Dokuments nach einem der Ansprüche 20 bis 19.

**24.** Gerät zum Faksimile-Senden/-Empfangen, **gekennzeichnet durch** eine Vorrichtung zur Durchführung des Verfahrens zur Ermittlung der Vorderkante eines Dokuments nach einem der Ansprüche 20 bis 22.

**Revendications**

**1.** Procédé de détection du bord avant d'un document, destiné à être utilisé dans un équipement de traitement numérique d'informations graphiques situées sur un document, comprenant des moyens d'avancement (10) possédant une surface extérieure de couleur blanche (11) et servant à faire avancer le document dans une première direction sensiblement perpendiculaire audit bord ; des moyens de soutien légèrement transparents (12) servant à soutenir le document qui est en contact avec lesdits moyens d'avancement et définissant par conséquent une zone de contact (13) ; des moyens d'éclairage (15) servant à illuminer ladite zone de contact au moyen de ladite lumière transmise à travers lesdits moyens de soutien vers ladite zone de contact dans une seconde direction ; des moyens de conversion photoélectriques (20) servant à convertir au moins une fraction de ladite lumière diffusée par ladite zone de contact en un signal électrique, lesdits moyens de conversion photoélectriques comportant une première multiplicité d'éléments d'images, également appelés ci-après "pixels", disposés selon un pas constant le long d'une première ligne sensiblement parallèle audit bord ; des moyens électroniques de traitement et de commande servant à traiter ledit signal en attribuant au signal de chacun desdits éléments d'images l'état de pixel noir ou de pixel blanc selon que ledit niveau du signal électrique est respectivement inférieur ou supérieur à une valeur déterminée, et en produisant, à des moments déterminés, une ligne de lecture constituée par l'agrégat desdits états attribués à ladite première multiplicité de pixels, le procédé étant **caractérisé en ce qu'**il comprend les étapes suivantes :

- production d'une ligne de lecture mentionnée ci-dessus et détermination (31), à partir de cette dernière, d'un premier nombre (BGND) de pixels noirs contenus dans ladite ligne de lecture correspondant à ladite fraction de ladite lumière diffusée par ladite zone de contact (13) en l'absence de document ;
- définition (32) d'un deuxième nombre de pixels noirs supérieur, d'une quantité déterminée (DELTA), audit premier nombre ;
- avancement (33), sur une distance prédéterminée, du document, production (34) d'une ligne de lecture supplémentaire, et détermination (36), à partir de cette dernière, d'un troisième nombre (N) de pixels noirs contenus dans ladite ligne de lecture ;
- comparaison (37) dudit troisième nombre (N) audit deuxième nombre et, si ledit troisième nombre (N) est inférieur audit deuxième nombre, répétition de l'étape précédente ; ou alors, si ledit troisième nombre (N) est supérieur audit deuxième nombre, délivrance (39) d'un signal de détection de bord avant de document.

2. Procédé selon la revendication 1, **caractérisé d'une part en ce que** ladite première ligne a un centre et en ce que ladite première multiplicité de pixels comprend une première pluralité de pixels disposés dans ledit centre, et d'autre part en ce que ladite ligne de lecture est uniquement constituée des états de ladite première pluralité de pixels.

3. Procédé selon la revendication 2, **caractérisé en ce que** le nombre de pixels compris dans ladite première pluralité de pixels est compris entre 50 et 200.

4. Procédé selon la revendication 1, **caractérisé en ce que** lesdits moyens d'avancement comprennent un rouleau (10) dont ladite surface extérieure (11) est continue.

5. Procédé selon la revendication 1, **caractérisé en ce que** lesdits moyens d'avancement comprennent un rouleau (10) ayant, sur ladite surface extérieure, au moins une rainure (21) située au centre de l'axe dudit rouleau.

6. Procédé selon la revendication 1, **caractérisé en ce que** lesdits moyens d'éclairage (15) comprennent une multiplicité des diodes électroluminescentes qui émettent ladite lumière dans ladite seconde direction.

7. Procédé selon la revendication 6, **caractérisé en ce que** ladite multiplicité de diodes électroluminescentes sont disposées en une deuxième ligne parallèle audit bord.

8. Procédé selon la revendication 6, **caractérisé en ce que** ladite seconde direction forme un angle $\beta$ de 15 à 65 degrés par rapport à la verticale du plan formé par lesdits moyens de soutien au niveau de ladite zone de contact.

9. Procédé selon la revendication 8, **caractérisé en ce que** ledit angle $\beta$ fait entre 30 et 50 degrés.

10. Procédé selon la revendication 1, **caractérisé en ce que** lesdits moyens d'éclairage (15) comprennent une lampe fluorescente.

11. Procédé selon la revendication 1, **caractérisé en ce que** lesdits moyens d'éclairage (15) comprennent au moins une lampe à incandescence.

12. Procédé selon la revendication 1, **caractérisé en ce que** lesdits moyens de conversion photoélectriques (20) comprennent un dispositif photoélectrique de type circuit à couplage de charge (CCD).

13. Procédé selon la revendication 1, **caractérisé en ce que** lesdits moyens de conversion photoélectriques (20) comprennent un capteur vidéo à contact direct.

14. Procédé selon la revendication 1, **caractérisé en ce que** lesdits moyens d'avancement (10) comprennent une courroie d'alimentation.

15. Procédé selon l'une quelconque des revendications précédentes, **caractérisé en ce que** ledit premier nombre (BGND) est déterminé (36) en calculant la moyenne du nombre de pixels noirs contenus dans une pluralité de lignes de lecture consécutives en l'absence de document.

16. Procédé selon la revendication 15, **caractérisé en ce que** ladite pluralité de lignes de lecture consécutives est constituée de trente-deux lignes de lecture consécutives.

**17.** Procédé selon l'une quelconque des revendications précédentes, **caractérisé en ce que** ledit procédé comprend, de plus, l'étape (38) de modification dudit premier nombre (BGND) en liaison avec la valeur dudit troisième nombre (N) si ledit troisième nombre est inférieur audit deuxième nombre.

**18.** Procédé selon l'une quelconque des revendications précédentes, **caractérisé en ce que** ledit troisième nombre (N) est déterminé sur la base de la somme du nombre de pixels noirs contenus dans une autre pluralité de lignes de lecture consécutives.

**19.** Procédé selon la revendication 18, **caractérisé en ce que** ladite autre pluralité est constituée de trois lignes de lecture consécutives.

**20.** Dispositif de détection du bord avant d'un document, comprenant :

- des moyens d'avancement (10) comportant une surface extérieure de couleur blanche (11) et servant à faire avancer le document dans une première direction sensiblement perpendiculaire audit bord ;
- des moyens de soutien (12) servant à soutenir le document qui est en contact avec lesdits moyens d'avancement et définissant par conséquent une zone de contact (13), lesdits moyens de soutien étant capables de transmettre la lumière sans atténuation sensible ;
- des moyens d'éclairage (15) servant à illuminer ladite zone de contact (13) au moyen de ladite lumière transmise à travers lesdits moyens de soutien vers ladite zone de contact ;
- des moyens de conversion photoélectriques (20) servant à convertir au moins une fraction de ladite lumière diffusée par ladite zone de contact en un signal électrique ayant un niveau sensiblement proportionnel à ladite fraction, lesdits moyens de conversion photoélectriques (20) comportant une première multiplicité d'éléments d'images, également appelés ci-après "pixels", disposés selon un pas constant le long d'une première ligne sensiblement parallèle audit bord ;
- des moyens électroniques de traitement et de commande servant à traiter ledit signal en attribuant au signal de chacun desdits éléments d'images l'état de pixel noir ou de pixel blanc selon que ledit niveau du signal électrique est respectivement inférieur ou supérieur à une valeur déterminée, et en produisant, à des moments déterminés, une ligne de lecture constituée par l'agrégat desdits états attribués à ladite première multiplicité de pixels en coïncidence avec lesdits moments ;

**caractérisé en ce que** lesdits moyens électroniques de traitement et de commande fonctionnent selon un procédé qui comprend les étapes suivantes :

- production d'une ligne de lecture mentionnée ci-dessus et détermination (31), à partir de cette dernière, d'un premier nombre (BGND) de pixels noirs contenus dans ladite ligne de lecture correspondant à ladite fraction de ladite lumière diffusée par ladite zone de contact (13) en l'absence de document ;
- définition (32) d'un deuxième nombre de pixels noirs supérieur, d'une quantité déterminée (DELTA), audit premier nombre (BGND) ;
- avancement (33), sur une distance prédéterminée, du document ; production (34) d'une ligne de lecture supplémentaire ; et détermination (36), à partir de cette dernière, d'un troisième nombre (N) de pixels noirs contenus dans ladite ligne de lecture ;
- comparaison (37) dudit troisième nombre (N) audit deuxième nombre et, si ledit troisième nombre est inférieur audit deuxième nombre, répétition de l'étape précédente ; ou alors, si ledit troisième nombre (N) est supérieur audit deuxième nombre, délivrance (39) d'un signal de détection de bord avant de document.

**21.** Dispositif selon la revendication 20, **caractérisé en ce qu'**il comprend, de plus, des moyens optiques (16, 17, 18, 19) servant à recueillir et à concentrer ladite lumière diffusée, et **en ce que** lesdits moyens optiques comprennent au moins un miroir plan (16, 17, 18).

**22.** Dispositif selon la revendication 21, **caractérisé en ce que** lesdits moyens optiques comprennent une lentille convergente (19).

**23.** Équipement de transmission et de réception de télécopie, **caractérisé en ce qu'**il comprend des moyens servant à mettre en oeuvre le procédé de détection du bord avant d'un document selon l'une quelconque des revendications 1 à 19.

**24.** Équipement de transmission et de réception de télécopie, **caractérisé en ce qu'**il comprend un dispositif de détection du bord avant d'un document selon l'une quelconque des revendications 20 à 22.

Fig. 1

START — 30

MEASURING THE BACKGROUND VALUE (BGND) — 31

FIXING A THRESHOLD PARAMETER (DELTA) — 32

FEEDING THE DOCUMENT — 33

LINE READING — 34

COUNTING THE NUMBER OF "BLACK" PIXELS CONTAINED IN THE LINE — 35

COUNTING THE NUMBER (N) OF "BLACK" PIXELS IN 3 CONSECUTIVE LINES — 36

37 — $N > (BGND + DELTA)$ ?

38 — CORRECTING THE BACKGROUND VALUE

NO

YES

LEADING EDGE DETECTED — 39

END — 40

Fig. 2

12

Fig. 3a

Fig. 3b

Fig. 3c